# EUROPEAN PATENT SPECIFICATION

(11) **EP 1 628 039 B1**
(45) Date of publication and mention of the grant of the patent: **11.01.2012**
(21) Application number: 05016985.3
(22) Date of filing: 04.08.2005
(51) Int. Cl.: F16F 9/44

(54) **Hydraulic shock absorber**
Hydraulischer Stossdämpfer
Amortisseur hydraulique

(30) Priority: 20.08.2004 JP 2004241044
(43) Date of publication of application: 22.02.2006
(73) Proprietor: Yamaha Hatsudoki Kabushiki Kaisha, Iwata-shi, Shizuoka-ken (JP)
(72) Inventor: Fukuda, Hiromi, Iwata-shi Shizuoka-ken (JP)
(74) Representative: Grünecker, Kinkeldey, Stockmair & Schwanhäusser

(56) References cited:
- WO-A1-99/02889
- US-A- 5 020 781
- US-A- 5 873 437

## Description

The present invention relates to a shock absorber according to the preamble portion of claim 1. Such a shock absorber can be taken from the prior art document WO 99/02889 A.

One example of conventional electronic damping force control valve for use in hydraulic shock absorbers for vehicles is disclosed in JP-B-2839319. The damping force control valve disclosed in JP-B-2839319 is provided at the middle of a fluid path through which pressurized fluid flows out of the hydraulic shock absorber. The damping force control valve increases and decreases the resistance to the flow of the pressurized fluid from the high pressure side to the low pressure side to control the magnitude of damping force.

The resistance is controlled by the force that urges a valve element, which opens and closes the fluid path, in the closing direction. This force is the resultant force of the elastic reaction force of a compression coil spring and the urging force of a linear solenoid. That is, the damping force of the hydraulic shock absorber having the damping force control valve is increased by increasing the urging force of the linear solenoid, and decreased by decreasing the urging force of the linear solenoid.

The conventional damping force control valve performs control such that suitable damping force corresponding to driving conditions of a vehicle is generated.

Since the conventional damping force control valve for hydraulic shock absorbers constructed as described above generates damping force corresponding to driving conditions of a vehicle, the damping force does not change unless the driving conditions do not change. Thus, when the hydraulic shock absorber is abruptly contracted, for example as a wheel goes over a bump on the road with the damping force increased to be more than usual by the damping force control valve, a great shock is transmitted from the wheel side to the vehicle body side because a constant large magnitude of damping force is generated while the piston starts and then stops moving, which spoils the riding comfort. In other words, the conventional damping force control valve for hydraulic shock absorbers has been faced with requests for control of damping force according to the behavior of a vehicle body.

The conventional hydraulic shock absorber has also experienced a problem of damping force becoming larger than the setting because of the expansion of hydraulic fluid previously compressed and the shrinkage by elastic deformation of a cylinder previously expanded, in a final stage of a stroke where a piston rod is retracted out of the cylinder to increase the overall length of the shock absorber (hereinafter this stroke is simply referred to as an expansion stroke) and in a final stage of a stroke where the piston rod is advanced into the cylinder to reduce the overall length of the shock absorber (hereinafter this stroke is simply referred to as a compression stroke). Another problem with the conventional hydraulic shock absorber is that it does not act as a damper immediately after it has reached dead center where its energy is released (hereinafter this state is simply referred to as a near no load state). This is because it is impossible to allow hydraulic fluid of a volume corresponding to the expansion of hydraulic fluid and the shrinkage of the cylinder into a fluid chamber immediately before the piston reaches dead center. This problem is more apparent when the damping force is larger, because the amount of hydraulic fluid expanded is larger and a throttle is smaller.

The present invention has been made in view of the foregoing problems, and therefore has the objective to provide a shock absorber as indicated above capable of controlling damping force according to the behavior of a vehicle body.

According to the present invention said object is solved by a shock absorber having the features of independent claim 1. Preferred embodiments are laid down in the dependent claims.

This objective is solved in an inventive manner by a shock absorber, in particular for vehicles, having a damping force control valve for controlling a magnitude of a clamping force generated by a movement of a piston to a target value, comprising a clamping force setting means configured to vary the target value depending on a change in a moving speed of the piston.

The present shock absorber is capable of generating stable damping force during shifts from an expansion stroke to a compression stroke and vice versa.

There is provided an acceleration and deceleration detection means for detecting acceleration and deceleration of the piston when it is moving.

Further, preferably the shock absorber is a hydraulic shock absorber.

The damping force setting means comprises a damping force correction means for reducing the target value of the damping force when the piston is decelerating compared to when it is accelerating.

Yet further, preferably there is provided an expansion side damping force control valve provided in a first fluid path connected to a piston rod side fluid chamber of the hydraulic cylinder.

Even further, preferably there is provided a compressor side damping force control valve provided in a second fluid path connected to a head side fluid chamber of the hydraulic cylinder.

Beneficially, the expansion side damping force control valve and the compression side damping force control valve are constructed to allow hydraulic fluid to flow to an accumulator side, which is a low pressure side, when the hydraulic pressure on the cylinder side, which is a high pressure side, has exceeded a predetermined opening pressure.

Further, beneficially the opening pressure is increased and decreased by a linear solenoid provided for each of the valves.

Still further, beneficially the damping force control valves are accommodated and supported in a valve case.

According to a preferred embodiment, there is provided a control unit for controlling the damping force control valve, comprising at least a piston position calculating means, a piston speed calculation means, a piston acceleration calculation means and a damping force calculating means.

Therein, it is beneficial if the control unit is connected to the linear solenoids of the respective damping force control valves and a stroke sensor, wherein the stroke sensor is coupled to the rear arm via a link so as to detect the amount of swing of the rear arm.

According to a further preferred embodiment, the target value of damping force obtained by the damping force calculation means is set to be generally proportional to the moving speed of the piston of the hydraulic shock absorber.

According to yet another embodiment, there is provided a motorcycle having at least one cushion unit, wherein the at least one cushion unit comprises a shock absorber according to the above.

In the following, the present invention is explained in greater detail with respect to several embodiments thereof in conjunction with the accompanying drawings, wherein:
- FIG. 1: is a side view of a motorcycle having a hydraulic shock absorber according to one embodiment;
- FIG. 2: is a block diagram showing the construction of a hydraulic system of the hydraulic shock absorber;
- FIG. 3: is a block diagram showing the construction of a control unit for a damping force control valve;
- FIG. 4: is a graph as a map of correction coefficients; and
- FIG. 5: is a graph showing the relationship between the moving speed of a piston and the damping force.

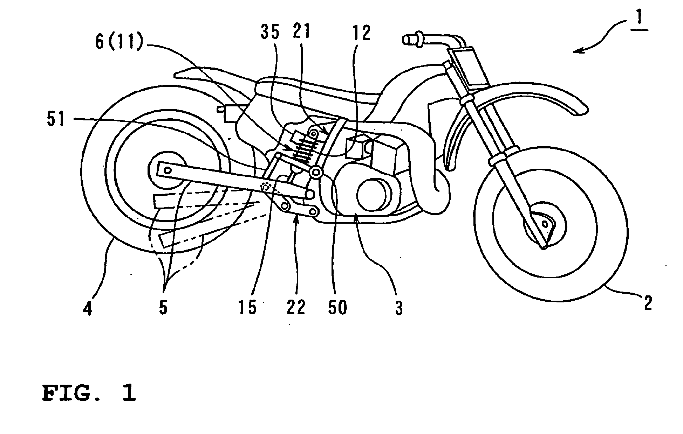

An embodiment of a hydraulic shock absorber according to the present embodiments will be hereinafter described in detail with reference to FIGs. 1 through 5.

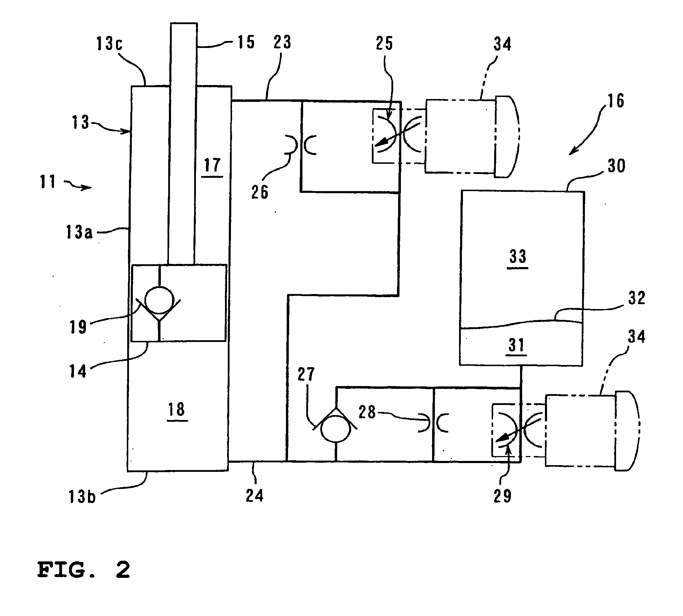

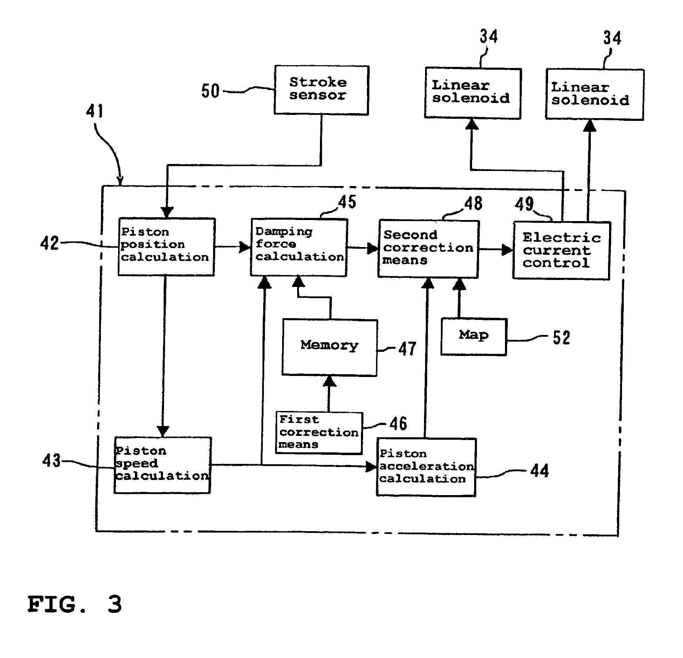

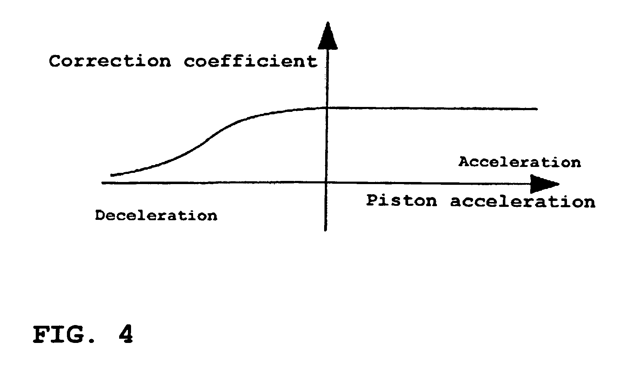

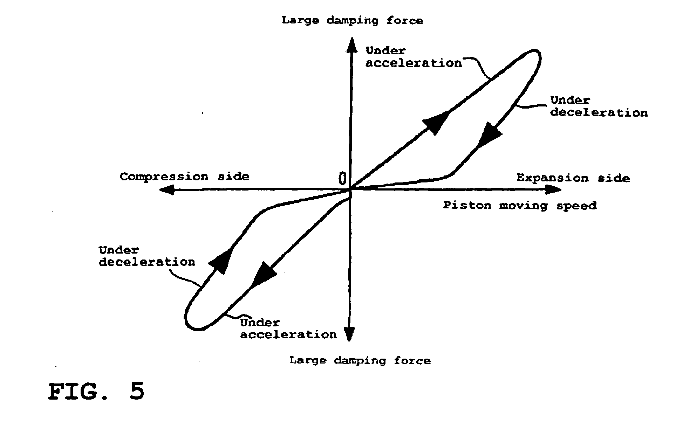

FIG. 1 is a side view of a motorcycle having the hydraulic shock absorber according to the present embodiment. FIG. 2 is a block diagram showing the construction of a hydraulic system of the hydraulic shock absorber. FIG. 3 is a block diagram showing the construction of a control unit for a damping force control valve. FIG. 4 is a graph as a map of correction coefficients. FIG. 5 is a graph showing the relationship between the moving speed of a piston and the damping force.

In the drawings, reference numeral 1 denotes a motorcycle according to this embodiment. Reference numeral 2 denotes a front wheel, 3 an engine, 4 a rear wheel, 5 a rear arm, and 6 a rear cushion unit, of the motorcycle 1. In the motorcycle 1, a hydraulic shock absorber 11 (see FIG. 2) according to the present invention is used in the rear cushion unit 6.

The rear cushion unit 6 is made up of the hydraulic shock absorber 11 and a compression coil spring 12 (see FIG. 1).

As shown in FIG. 2, the hydraulic shock absorber 11 is made up of a hydraulic cylinder 13, a piston 14 movably fitted and inserted in the hydraulic cylinder 13, a piston rod 15 for supporting the piston 14, a hydraulic unit 16 connected to the hydraulic cylinder 13, and so forth. The hydraulic cylinder 13 is constructed such that one end of a tube 13a is closed by a head cover 13b and the other end thereof is closed by a rod cover 13c. The inside of the hydraulic cylinder 13 is filled with hydraulic fluid. The piston 14 is fitted and inserted in the tube 13a, defining the inside of the hydraulic cylinder 13 into a rod side fluid chamber 17 and a head side fluid chamber 18. In this embodiment, also, a stroke where the piston rod 15 is pushed out of the hydraulic cylinder 13 by the movement of the piston 14 toward the rod cover 13c side to increase the overall length of the hydraulic shock absorber 11 is simply referred to as an expansion stroke, and, on the contrary, a stroke where the piston rod 15 is received into the hydraulic cylinder 13 by the movement of the piston 14 toward the head cover 13b side to reduce the overall length of the hydraulic shock absorber 11 is simply referred to as a compression stroke.

The piston 14 is provided with a check valve 19 which allows hydraulic fluid to pass from the head side fluid chamber 18 to the rod side fluid chamber 17 only.

An end of the hydraulic cylinder 13, on the lower side in FIG. 2, is pivotally supported on a vehicle body frame 21 (see FIG. 1) of the motorcycle 1. On the other hand, an end of the piston rod 15 is coupled to the rear arm 5 via a link mechanism 22.

As shown in FIG. 2, an end of a first fluid path 23 of the hydraulic unit 16 is connected to the rod side fluid chamber 17, and an end of a second fluid path 24 is connected to the head side fluid chamber 18. The first fluid path 23 is provided with an expansion side damping force control valve 25 to be described later and a fixed throttle 26 for generating damping force, disposed in parallel with each other.

The second fluid path 24 is provided with a check valve 27, a fixed throttle 28 for generating damping force, and a compression side damping force control valve 29 to be described later, disposed in parallel with each other. The other end of the first fluid path 23 is connected to the second fluid path 24, between the head side fluid chamber 18 and the check valve 27.

The other end of the second fluid path 24 is connected to a fluid chamber 31 of an accumulator 30. The accumulator 30 is constructed such that the fluid chamber 31 and a gas chamber 33 adjoin each other via a movable partition wall 32. The gas chamber 33 is filled with high-pressure gas by which pressure the hydraulic fluid in the fluid chamber 31 is urged.

The check valve 27 on the second fluid path 24 is connected in such a manner as to allow hydraulic fluid to flow from the accumulator 30 side to the head side fluid chamber 18 side or the first fluid path 23 side only.

The fixed throttles 26 and 28 respectively provided on the first and second fluid paths 23 and 24 are constructed of an orifice, a plate valve, or the like. The fixed throttle 26 provided on the first fluid path 23 generates damping force when the hydraulic shock absorber 11 is in an expansion stroke, by allowing hydraulic fluid to flow from the upper side to the lower side of FIG. 2.

The fixed throttle 28 provided on the second fluid path 24 generates damping force when the hydraulic shock absorber 11 is in a compression stroke, by allowing hydraulic fluid to flow from the lower side to the upper side of FIG. 2.

The expansion side damping force control valve 25 and the compression side damping force control valve 29 are constructed to allow hydraulic fluid to flow to the accumulator 30 side (low pressure side) when the hydraulic pressure on the cylinder 13 side (high pressure side) has exceeded a predetermined opening pressure. The opening pressure is increased and decreased by a linear solenoid 34 (see FIG. 3) provided for each of the valves. The linear solenoids 34 and 34 are controlled to operate by a control unit 41 (see FIG. 3) to be described later.

In other words, the expansion side damping force control valve 25 increases and decreases the amount of hydraulic fluid which flows through the fixed throttle 26 on the first fluid path 23 from the left side to the right side in FIG. 2 when the piston rod 15 is retracted to increase the overall length of the hydraulic shock absorber 11, to control the magnitude of damping force to be generated during that time. The compression side damping force control valve 29 increases and decreases the amount of hydraulic fluid which flows through the fixed throttle 28 on the second fluid path 24 from the lower side to the upper side in FIG. 2 when the piston rod 15 is advanced to reduce the overall length of the hydraulic shock absorber 11, to control the magnitude of damping force to be generated during that time.

The damping force control valves 25 and 29, the fixed throttles 26 and 28, and the check valve 27 are accommodated and supported in a valve case 35 provided on a side of the rear cushion unit 6 as shown in FIG. 1.

As shown in FIG. 3, the control unit 41 for controlling the expansion side damping force control valve 25 and the compression side damping force control valve 29 is made up of piston position calculation means 42, piston speed calculation means 43, piston acceleration calculation means 44, damping force calculation means 45, first correction means 46, a memory 47, second correction means 48, and electric current control means 49. The control unit 41 is connected to the linear solenoids 34 and 34 of the respective damping force control valves 25 and 29, and a stroke sensor 50. As shown in FIG. 1, the stroke sensor 50 in this embodiment is coupled to the rear arm 5 via a link 51 so as to detect the amount of swing of the rear arm 5.

The piston position calculation means 42 is constructed to obtain by calculation the position of the piston 14 of the hydraulic shock absorber 11 from the amount of swing of the rear arm 5 detected by the stroke sensor 50.

The piston speed calculation means 43 is constructed to obtain the moving speed of the piston 14 by detecting, for example at regular intervals, the position of the piston 14 obtained by the piston position calculation means 42.

The piston acceleration calculation means 44 is constructed to obtain the acceleration of the piston 14 as it moves, by detecting, for example at regular intervals, the moving speed of the piston 14 obtained by the piston speed calculation means 43. The piston position calculation means 42, the piston speed calculation means 43, and the piston acceleration calculation means 44 constitute acceleration detection means of the present embodiment.

The damping force calculation means 45 is constructed to obtain by calculation a target value of damping force based on the position of the piston 14 detected by the piston position calculation means 42, the moving speed of the piston 14 detected by the piston speed calculation means 43, and a correction value stored in the memory 47. The correction value is set by the first correction means 46. The first correction means 46 is constructed to select by human operation one correction value out of plural correction values stored in the memory 47, so as to increase and decrease the damping force of the hydraulic shock absorber 11, for example according to operation by a rider.

The target value of damping force obtained by the damping force calculation means is set to be generally proportional to the moving speed of the piston 14 of the hydraulic shock absorber 11.

The second correction means 48 is constructed to correct the target value of damping force obtained by the damping force calculation means 45, based on the calculation results by the piston acceleration calculation means 44. The second correction means 48 and the damping force calculation means constitute damping force setting means of the present invention. In this embodiment, the correction by the second correction means 48 is achieved by reading data from a map 52. The map 50 constitutes damping force correction means of the present embodiment.

As shown in FIG. 4, the map 50 is prepared by allocating correction coefficients to piston accelerations. The correction coefficients refer to predetermined constants for use to correct the target values. Specifically, when the moving speed of the piston 14 is increasing (under acceleration), the second correction means 48 keeps the correction coefficient constant. On the other hand, when the moving speed of the piston 14 is decreasing (under deceleration), the second correction means 48 sets the correction coefficient to be smaller than it would be under acceleration, by a degree corresponding to the magnitude of deceleration rate (degree of deceleration).

In other words, the correction of the target value of damping force by the second correction means 48 allows the damping force of the hydraulic shock absorber 11 to increase at a constant rate when the piston 14 is accelerating, as shown in FIG. 5. On the other hand, when the piston 14 is decelerating, the damping force of the hydraulic shock absorber 11 is smaller than it would be when the piston 14 is accelerating, gradually decreased as the deceleration rate gradually increases.

The electric current control means 49 is constructed to supply the linear solenoids 34 with electric current which generates the damping force set by the second correction means 48.

In the thus constructed hydraulic shock absorber 11 having the hydraulic unit 16 made up of the damping force control valves 25 and 29, the control unit 41, and so forth, it is detected whether the moving speed of the piston 14 is increasing or decreasing, and the target value of damping force is varied depending on that. This allows control of damping force according to the acceleration with which the piston 14 is moving. Thus, the hydraulic shock absorber 11 of this embodiment can generate damping force of a proper corresponding to the behavior of a vehicle body, and can mitigate shock transmitted from the rear wheel 4 side to the vehicle body frame 21 side by reducing the damping force in the latter stage of a stroke of the hydraulic shock absorber 11.

In addition, the hydraulic shock absorber 11 of this embodiment is provided with the second correction means 48 for reducing the target value of damping force to be generated by the damping force control valves 25 and 29 when the moving speed of the piston 14 is decreasing, compared to when the piston 14 is accelerating. This relatively reduces the damping force in final stages of expansion and compression strokes, thereby suppressing the compression of the hydraulic fluid and the elastic deformation of the cylinder to a small degree during that time. Therefore, since the piston 14 is prevented from moving with no or nearly no load during shifts from an expansion stroke to a compression stroke and vice versa, the hydraulic shock absorber 11 of this embodiment can generate stable damping force during that time.

In the embodiment described above, the magnitude of damping force with the piston 14 under deceleration is controlled based on the map shown in FIG. 4. However, the magnitude of damping force may be set by calculation, as an alternative to using a map.

The expansion side damping force control valve 25 and the compression side damping force control valve 29 in the embodiment described above are constructed to control damping force by controlling the amount of pressurized fluid which passes through the fixed throttles 26 and 28 for generating damping force. The present invention, however, is not limited thereto. For example, a damping force control valve which itself can generate, and control the magnitude of, damping force may be used. The form of controlling the magnitude of damping force may also be appropriately altered. The control may be attained by, for example, controlling the hydraulic pressure or varying the opening area of a fluid path.

The embodiment described above has been illustrated as being applied to a rear cushion unit of a motorcycle. The present hydraulic shock absorber, however, can be applied as a hydraulic shock absorber in a front fork or as a hydraulic shock absorber for wheel suspensions of four wheelers or three wheelers.

The description above discloses (amongst others) a preferred embodiment of a hydraulic shock absorber having a damping force control valve for controlling the magnitude of damping force generated by the movement of a piston to a target value, including: acceleration and deceleration detection means for detecting acceleration of the piston when it is moving; and damping force setting means for varying the target value depending on whether the piston is accelerating or decelerating.

This hydraulic shock absorber can control damping force according to the acceleration of the piston as it moves, so as to generate proper damping force corresponding to the behavior of a vehicle body. Thus, installation of the hydraulic shock absorber according to the present invention can improve the riding comfort of the vehicle.

It is preferable if the damping force setting means includes damping force correction means for reducing the target value of the damping force when the piston is decelerating, compared to when it is accelerating.

The such constructed embodiment of the hydraulic shock absorber can relatively reduce the damping force in final stages of expansion and compression strokes, thereby suppressing the compression of the hydraulic fluid and the elastic deformation of the cylinder to a small degree. Thus, the piston does not move in a near no load condition during shifts of the hydraulic shock absorber from an expansion stroke to a compression stroke and vice versa.

Therefore, the embodiments can provide a hydraulic shock absorber capable of generating stable damping force even during reversals of the moving direction of the piston.

Thus, the description above discloses in a preferred embodiment to provide a hydraulic shock absorber 11 capable of controlling damping force according to changes in behavior of a vehicle body, wherein damping force control valves 25 and 29 for controlling the magnitude of damping force generated by the movement of a piston 14 to a target value are provided. Acceleration and deceleration detection means (piston position calculation means 42, piston speed calculation means 43, and piston acceleration calculation means 44) for detecting whether the moving speed of the piston 14 is increasing or decreasing is provided. Damping force setting means (damping force calculation means 45 and second correction means 48) for changing the target value depending on whether the moving speed of the piston 14 is increasing or decreasing is provided.

## Claims

1. Shock absorber (11), in particular for vehicles (1), having a damping force control valve (25, 29) for controlling a magnitude of a damping force generated by a movement of a piston (14) to a target value, means for detecting acceleration of the piston (14) and a damping force setting means configured to vary the target value depending on a change in a moving speed of the piston (14), **characterized by** an acceleration and deceleration detection means for detecting acceleration and deceleration of the piston (14) when it is moving, wherein the damping force setting means comprises a damping force correction means for reducing the target value of the damping force when the piston (14) is decelerating compared to when it is accelerating.

2. Shock absorber (11) according to claim 1, **characterized in that** the shock absorber is a hydraulic shock absorber.

3. Shock absorber (11) according to claim 1 or 2, **characterized by** an expansion side damping force control valve (25) provided in a first fluid path (23) connected to a piston rod side fluid chamber (17) of the hydraulic cylinder (13).

4. Shock absorber according to one of the claims 1 to 3, **characterized by** a compressor side damping force control valve (29) provided in a second fluid path (24) connected to a head side fluid chamber (18) of the hydraulic cylinder (13).

5. Shock absorber according to claims 3 and 4, **characterized in that** the expansion side damping force control valve (25) and the compression side damping force control valve (29) are constructed to allow hydraulic fluid to flow to an accumulator (30) side, which is a low pressure side, when the hydraulic pressure on the cylinder (13) side, which is a high pressure side, has exceeded a predetermined opening pressure.

6. Shock absorber according to claim 5, **characterized in that** the opening pressure is increased and decreased by a linear solenoid (34) provided for each of the valves (25, 29).

7. Shock absorber according to one of the claims 4 to 6, **characterized in that** the damping force control valves (25, 29) are accommodated and supported in a valve case (35).

8. Shock absorber according to one of the claims 1 to 7, **characterized by** a control unit (41) for controlling the damping force control valve (25, 29), comprising at least a piston position calculating means (42), a piston speed calculation means (43), a piston acceleration calculation means (44) and a damping force calculating means (45)

9. Shock absorber according to claim 8, **characterized in that** the control unit (41) is connected to the linear solenoids (34) of the respective damping force control valves (25 and 29) and a stroke sensor (50), wherein the stroke sensor (50) is coupled to the rear arm (5) via a link (51) so as to detect the amount of swing of the rear arm (5).

10. Shock absorber according to one of the claims 1 to 9, **characterized in that** the target value of damping force obtained by the damping force calculation means is set to be generally proportional to the moving speed of the piston (14) of the hydraulic shock absorber (11).

11. Motorcycle having at least one cushion unit, wherein the at least one cushion unit comprises a shock absorber according to one of the claims 1 to 10.

## Patentansprüche

1. Stoßdämpfer (11), insbesondere für Fahrzeuge (1), mit einem Dämpfungskraft-Steuerungsventil (25, 29) zum Steuern einer Größe einer Dämpfungskraft, erzeugt durch eine Bewegung eines Kolbens (14), auf einen Zielwert, einer Einrichtung zum Erfassen der Beschleunigung des Kolbens (14) und einer Dämpfungskraft- Festlegungseinrichtung, konfiguriert den Zielwert in Abhängigkeit einer Veränderung in einer Bewegungsgeschwindigkeit des Kolbens (14) zu variieren, **gekennzeichnet durch** eine Beschleunigungs- und Abbremsungs- Erfassungseinrichtung zum Erfassen der Beschleunigung und Abbremsung des Kolbens (14), wenn er bewegt wird, wobei die Dämpfungskraft- Festlegungseinrichtung eine Dämpfungskraft- Korrektureinrichtung aufweist, zum Reduzieren des Zielwertes der Dämpfungskraft, wenn der Kolben (14) abgebremst wird, verglichen zu dem, wenn er beschleunigt wird.

2. Stoßdämpfer (11) nach Anspruch 1, **dadurch gekennzeichnet, dass** der Stoßdämpfer ein hydraulischer Stoßdämpfer ist.

3. Stoßdämpfer (11) nach Anspruch 1 oder 2, **gekennzeichnet durch** ein expansionsseitiges Dämpfungskraft- Steuerungsventil (25), vorgesehen in einem ersten Fluid-Pfad (23), verbunden mit einer kolbenstangenseitigen Fluid- Kammer (17) des hydraulischen Zylinders (13).

4. Stoßdämpfer nach einem der Ansprüche 1 bis 3, **gekennzeichnet durch** ein kompressionsseitiges Dämpfungskraft- Steuerungsventil (29), vorgesehen in einem zweiten Fluid- Pfad (24), verbunden mit einer kopfseitigen Fluid- Kammer (18) des hydraulischen Zylinders (13).

5. Stoßdämpfer nach den Ansprüchen 3 und 4, **dadurch gekennzeichnet, dass** das expansionsseitige Dämpfungskraft- Steuerungsventil (25) und das kompressionsseitige Dämpfungskraft- Steuerungsventil (29) aufgebaut sind, um dem hydraulischen Fluid zu gestatten, zu einer Seite des Sammlers (30), die eine Niederdruckseite ist, zu strömen, wenn der hydraulische Druck auf die Seite des Zylinders (13), die eine Hochdruckseite ist, einen vorbestimmten Öffnungsdruck überschritten hat.

6. Stoßdämpfer nach Anspruch 5, **dadurch gekennzeichnet, dass** der Öffnungsdruck durch eine lineare Magnetspule (34), vorgesehen für jedes der Ventile (25, 29), erhöht oder vermindert wird.

7. Stoßdämpfer nach einem der Ansprüche 4 bis 6, **dadurch gekennzeichnet, dass** die Dämpfungskraft- Steuerungsventile (25, 29) in einem Ventilgehäuse (35) aufgenommen und gelagert sind.

8. Stoßdämpfer nach einem der Ansprüche 1 bis 7, **gekennzeichnet durch** eine Steuerungseinheit (41) zum Steuern der Dämpfungskraft- Steuerungsventile (25, 29), aufweisend zumindest eine Kolbenpositions- Berechnungseinrichtung (42), eine Kolbengeschwindigkeit- Berechnungseinrichtung (43), eine Kolbenbeschleunigungs- Berechnungseinrichtung (44) und eine Dämpfungskraft- Berechnungseinrichtung (45).

9. Stoßdämpfer nach Anspruch 8, **dadurch gekennzeichnet, dass** die Steuerungseinheit (41) mit den linearen Magnetspulen (34) der jeweiligen Dämpfungskraft- Steuerungsventile (25, 29) und einem Hubsensor (50) verbunden ist, wobei der Hubsensor (50) mit dem hinteren Arm (5) über eine Verbindung (51) verbunden ist, um die Schwingungsgröße des hinteren Arms (5) zu erfassen.

10. Stoßdämpfer nach einem der Ansprüche 1 bis 9, **dadurch gekennzeichnet, dass** der Zielwert der Dämpfungskraft, erhalten durch die Dämpfungskraft- Berechnungseinrichtung, festgelegt ist, um im Wesentlichen zu der Bewegungsgeschwindigkeit des Kolbens (14) des hydraulische Stoßdämpfers (11) proportional zu sein.

11. Motorrad mit zumindest einer Kisseneinheit, wobei zumindest eine Kisseneinheit einen Stoßdämpfer nach einem der Ansprüche 1 bis 10 aufweist.

## Revendications

1. Amortisseur (11), en particulier pour des véhicules (1), comportant une soupape de commande de force d'amortissement (25, 29) pour commander une magnitude d'une force d'amortissement générée par le déplacement d'un piston (14) jusqu'à une valeur cible, des moyens pour détecter l'accélération du piston (14), et des moyens de réglage de force d'amortissement conçus pour modifier la valeur cible en fonction d'un changement de vitesse de déplacement du piston (14), **caractérisé par** des moyens de détection d'accélération et de décélération pour détecter une accélération et une décélération du piston (14) quand il se déplace, étant précisé que les moyens de réglage de force d'amortissement comprennent des moyens de correction de force d'amortissement pour réduire la valeur cible de la force d'amortissement lors de la décélération du piston (14), par rapport à son accélération.

2. Amortisseur (11) selon la revendication 1, **caractérisé en ce qu'**il s'agit d'un amortisseur hydraulique.

3. Amortisseur (11) selon la revendication 1 ou 2, **caractérisé par** une soupape de commande de force d'amortisseur côté expansion (25) qui est disposée sur une première trajectoire de fluide (23) reliée à une chambre de fluide côté tige de piston (17) du cylindre hydraulique (13).

4. Amortisseur selon l'une des revendications 1 à 3, **caractérisé par** une soupape de commande de force d'amortisseur côté compresseur (29) qui est disposée sur une seconde trajectoire de fluide (24) reliée à une chambre de fluide côté tête (18) du cylindre hydraulique (13).

5. Amortisseur selon les revendications 3 et 4, **caractérisé en ce que** la soupape de commande de force d'amortissement côté expansion (25) et la soupape de commande de force d'amortissement côté compression (29) sont construites pour permettre au fluide hydraulique de couler vers un côté accumulateur (30), qui est un côté basse pression, quand la pression hydraulique côté cylindre (13), qui est un côté haute pression, a dépassé une pression d'ouverture prédéterminée.

6. Amortisseur selon la revendication 5, **caractérisé en ce que** la pression d'ouverture est augmentée et réduite par un solénoïde linéaire (34) prévu pour chacune des soupapes (25, 29).

7. Amortisseur selon l'une des revendications 4 à 6, **caractérisé en ce que** les soupapes de commande de force d'amortissement (25, 29) sont logées et supportées dans un boîtier de soupapes (35).

8. Amortisseur selon l'une des revendications 1 à 7, **caractérisé par** une unité de commande (41) pour commander la soupape de commande de force d'amortissement (25, 29), comprenant au moins des moyens de calcul de position de piston (42), des moyens de calcul de vitesse de piston (43), des moyens de calcul d'accélération de piston (44) et des moyens de calcul de force d'amortissement (45).

9. Amortisseur selon la revendication 8, **caractérisé en ce que** l'unité de commande (41) est reliée aux solénoïdes linéaires (34) des soupapes de commande de force d'amortissement respectives (25 et 29) et à un capteur de course (50), étant précisé que le capteur de course (50) est accouplé au bras oscillant (5) par l'intermédiaire d'une liaison (51) de manière à détecter l'oscillation du bras oscillant (5).

10. Amortisseur selon l'une des revendications 1 à 9, **caractérisé en ce que** la valeur cible de la force d'amortissement obtenue par les moyens de calcul de force d'amortissement est réglée pour être globalement proportionnelle à la vitesse de déplacement du piston (14) de l'amortisseur hydraulique (11).

11. Motocycle comportant au moins une unité d'amortisseur, étant précisé que ladite unité d'amortisseur comprend un amortisseur selon l'une des revendications 1 à 10.
